# EUROPÄISCHE PATENTSCHRIFT

(11) **EP 2 024 620 B1**
(45) Veröffentlichungstag und Bekanntmachung des Hinweises auf die Patenterteilung: **29.07.2015**
(21) Anmeldenummer: 07728847.0
(22) Anmeldetag: 07.05.2007
(51) Int. Cl.: F02C 3/28, F02C 6/18, F02C 9/42, F02C 7/26, F01K 23/10

(54) **VERFAHREN ZUM BETRIEB EINER GASTURBINE UND KOMBIKRAFTWERK ZUR DURCHFÜHRUNG DES VERFAHRENS**
METHOD OF OPERATING A GAS TURBINE AND COMBINED CYCLE POWER PLANT FOR CARRYING OUT THE METHOD
PROCÉDÉ POUR FAIRE FONCTIONNER UNE TURBINE À GAZ ET CENTRALE COMBINÉE POUR LA MISE EN OEUVRE DU PROCÉDÉ

(30) Priorität: 07.06.2006 CH 916062006
(43) Veröffentlichungstag der Anmeldung: 18.02.2009
(73) Patentinhaber: ALSTOM Technology Ltd, 5400 Baden (CH)
(72) Erfinder: EROGLU, Adnan, CH-5417 Untersiggenthal (CH); HELLAT, Jaan, CH-5406 Baden-Rütihof (CH); GÜTHE, Felix, CH-4056 Basel (CH); FLOHR, Peter, CH-5300 Turgi (CH)
(86) Internationale Anmeldenummer: PCT/EP2007/054394
(87) Internationale Veröffentlichungsnummer: WO 2007/141101

(56) Entgegenhaltungen:
- EP-A- 0 723 068
- EP-A- 0 974 789
- DE-C- 947 843
- US-A- 5 689 948
- US-A- 6 116 016
- US-B1- 6 167 706

## Beschreibung

### TECHNISCHES GEBIET

Die vorliegende Erfindung bezieht sich auf das Gebiet der Gasturbinen. Sie betrifft ein Verfahren zum Betrieb einer Gasturbine gemäss dem Oberbegriff des Anspruchs 1, eine Anwendung des Verfahrens in einem Kombikraftwerk mit integrierter Vergasung, sowie ein Kombikraftwerk mit integrierter Vergasung zur Durchführung des Verfahrens.

### STAND DER TECHNIK

Ein Kombikraftwerk mit integrierter Vergasung (Integrated Gasification Combined Cycle IGCC) wird normalerweise mit einem synthetischen Gas (Syngas oder Mbtu-Gas) betrieben, das durch Vergasung von Kohle, Biomasse oder anderen Brennstoffen erzeugt wird (siehe z.B. die Druckschrift US-A-5,901,547). Um die Verfügbarkeit des Kraftwerks zu verbessern und die kontinuierliche Stromerzeugung sicherzustellen, ist normalerweise während der Wartungszeiten der Vergasungseinrichtung ein Stützbetrieb entweder mit Erdgas oder mit einem Flüssigbrennstoff notwendig.

Derartige IGCC-Kraftwerke werden üblicherweise mit einem Stützbrennstoff wie z.B. Erdgas oder Öl gestartet und dann auf Syngas umgeschaltet, nachdem die Vergasungseinrichtung in Betrieb genommen worden ist. Die Brennstoffumschaltung (Fuel Switch Over FSWO) vom Stützbrennstoff auf das Syngas ist ein sehr komplexer Übergangsprozess, der im allgemeinen mit Lastschwankungen, Pulsationen und dem Risiko eines Flammenrückschlags verbunden ist. Darüber hinaus ist das Risiko einer Schnellabschaltung der Gasturbine während des FSWO am höchsten.

IN bestimmten Fällen ist es möglich, in einer Brennkammer der Gasturbine den Brennstoff für jede der mehreren Brennergruppen einzeln umzuschalten, und so das Ausmass der Lastschwankungen oder das Risiko einer Schnellabschaltung der Gasturbine zu reduzieren. Dieser gruppenweise Betrieb kann auch für eine gemischte Verbrennung eingesetzt werden, wo einzelnen Brennergruppen mit unterschiedlichen Brennstoffzusammensetzungen betrieben werden, wie z.B. Syngas/Öl oder Syngas/Erdgas.

Das Hauptproblem mit dieser vorgängig beschriebenen Art des Betriebs ist ein erhöhtes Risiko des Flammenrückschlags oder von Pulsationen aufgrund von unterschiedlichen Flammenformen und Druckabfallkoeffizienten von Brennern in derselben Brennkammer bei unterschiedlichen Brennstoffen.

Es sind andererseits seit längerem Gasturbinen bekannt (US-A-5,577,378 oder A. Eroglu et al., Entwicklung des sequentiellen Verbrennungssystems für die Gasturbinenfamilie GT24/GT26, ABB Technik 4/1998, S. 4-16 (1998)), die mit Zwischenüberhitzung durch eine zweite Brennkammer arbeiten. Im Unterschied zu einer einstufigen Verbrennung bietet die sequentielle Verbrennung mit Zwischenüberhitzung durch eine zweite Brennkammer die Möglichkeit, jede der Brennkammern mit unterschiedlichen Brennstoffen zu betreiben. Derartige Gasturbinen mit sequentieller Verbrennung ermöglichen daher in einem IGCC-Kraftwerk neue Arten des Anfahrens, des Betriebes und der gemischten Verbrennung.

Die Druckschrift US-A-5,689,948 offenbart eine Gasturbinenanlage mit sequentieller Verbrennung, bei der beide Brennkammern grundsätzlich mit demselben gasförmigen Brennstoff betrieben werden. Es wird zwar auf den Zusatz von Öl als "auxiliary fuel" in der zweiten Brennkammer hingewiesen, um die Selbstentzündung zu gewährleisten.

Die Druckschrift US-A-6,167,706 offenbart eine Gasturbinenanlage mit nur eine Brennkammer (105 in Fig. 8). Eine zweite externe Brennkammer (106) gibt nur indirekt Wärme an komprimierte Luft ab, arbeitet jedoch nicht direkt auf eine weitere Turbine. Die gleichzeitige Verwendung unterschiedlicher Brennstoffe für die beiden Brennkammern wird nicht explizit angesprochen, sondern nur eine Reihe von möglichen Brennstoffen summarisch aufgezählt.

Die Druckschrift DE-C-947 843 offenbart eine Gasturbinenanlage mit mehreren Brennkammern, die jedoch alle mit demselben Gas aus einem Druckvergaser betrieben werden, das entweder direkt als Druckgas oder als Schleusengas anfällt.

Die Druckschrift US-A-6,116,016 offenbart eine Gasturbinenanlage (Fig. 6) mit zwei (sequentiellen) Brennkammern, von denen die erste mit Öl oder Erdgas, und die zweite mit Kohlegas betrieben wird.

Die Druckschrift EP-A1-0 723 068 offenbart eine Gasturbinenanlage mit sequentieller Verbrennung, bei der die beiden Brennkammern mit gasförmigen Brennstoffen unterschiedlichen H2-Gehalts betrieben werden, die bei einem Reformierungsprozess anfallen.

### DARSTELLUNG DER ERFINDUNG

Es ist Aufgabe der Erfindung, ein Verfahren zum Betrieb einer Gasturbine, sowie ein Kombikraftwerk mit integrierter Vergasung zur Durchführung des Verfahrens anzugeben, welche die Nachteile bisheriger Lösungen vermeiden und sich insbesondere durch einen sehr flexiblen und stabilen Betrieb auch und insbesondere in Übergangsphasen auszeichnen.

Die Aufgabe wird durch die Gesamtheit der Merkmale der Ansprüche 1 und 7 gelöst. Wesentlich für die Erfindung ist, dass die beiden Brennkammern der Gasturbine mit sequentieller Verbrennung (zumindest partiell) mit unterschiedlichen Brennstoffen betrieben werden, wobei der Betrieb mit den unterschiedlichen Brennstoffen insbesondere auch in einer Übergangsphase, wie z.B. einer Anfahrphase, erfolgen kann, und wobei die erste und/oder zweite Brennkammer mehrere Gruppen von Brennern umfasst, und die verschiedenen Brennergruppen innerhalb der Brennkammer mit unterschiedlichen Brennstoffen betrieben werden.

Eine Ausgestaltung des erfindungsgemässen Verfahrens ist dadurch gekennzeichnet, dass als erster und zweiter Brennstoff ein Brennstoff aus der Gruppe Syngas, Erdgas und Flüssigbrennstoff, insbesondere Öl, verwendet wird. Durch diese Brennstoffkombinationen ergibt sich für diese Gasturbine ein \ weites Einsatzgebiet und die Möglichkeit eines sehr flexiblen und störungssicheren Betriebs.

Eine weitere Ausgestaltung zeichnet sich dadurch aus, dass zum Anfahren der Gasturbine zunächst in einem ersten Schritt die erste Brennkammer mit einem ersten Brennstoff aus der Gruppe Erdgas und Flüssigbrennstoff, insbesondere Öl, als Stützbrennstoff betrieben wird, bis die Gasturbine einen vorgegebenen Teil, insbesondere etwa 33%, der Grundlast erreicht hat, und dass in einem zweiten Schritt zusätzlich die zweite Brennkammer mit Syngas als zweitem Brennstoff betrieben wird, bis die Grundlast erreicht ist. Insbesondere kann im zweiten Schritt die erste Brennkammer auf den Betrieb mit Syngas umgeschaltet werden.

Alternativ dazu ist es denkbar, dass die zweite Brennkammer mehrere Gruppen von Brennern umfasst, dass zum Anfahren der Gasturbine zunächst in einem ersten Schritt die erste Brennkammer mit einem ersten Brennstoff aus der Gruppe Erdgas und Flüssigbrennstoff, insbesondere Öl, als Stützbrennstoff betrieben wird, bis die Gasturbine einen vorgegebenen Teil, insbesondere etwa 33%, der Grundlast erreicht hat, und dass in einem zweiten Schritt zusätzlich die zweite Brennkammer zunächst mit einer Kombination aus Syngas und einem Stützbrennstoff aus der Gruppe Erdgas und Flüssigbrennstoff, insbesondere Öl, betrieben wird, wobei das Syngas und der Stützbrennstoff in unterschiedlichen Brennergruppen verbrannt wird, und dass die zweite Brennkammer in einem dritten Schritt schliesslich vollständig mit Syngas betrieben wird.

Eine Ausgestaltung des erfindungsgemässen Kombikraftwerkes ist dadurch gekennzeichnet, dass die erste Brennkammer und/oder die zweite Brennkammer eine Mehrzahl von einzeln mit Brennstoff versorgbaren Brenngruppen aufweisen, und dass die Brennergruppen einzeln über die Brennstoffverteilvorrichtung wahlweise mit der Brennstoffzufuhr oder dem Ausgang der Vergasungseinrichtung verbindbar sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem stark vereinfachten Blockschaltbild ein Kombikraftwerk mit integrierter Vergasung gemäss einem Ausführungsbeispiel der Erfindung; und
- Fig. 2: den Verlauf der Temperatur (T₁) in der ersten Brennkammer und die Sfellung der verstellbaren Einlass-Leitschaufeln (VIGV) am Verdichter über der Last (L, in % der Grundlast BL) der Gasturbine aus Fig. 1 beim Hochfahren.

### WEGE ZUR AUSFÜHRUNG DER ERFINDUNG

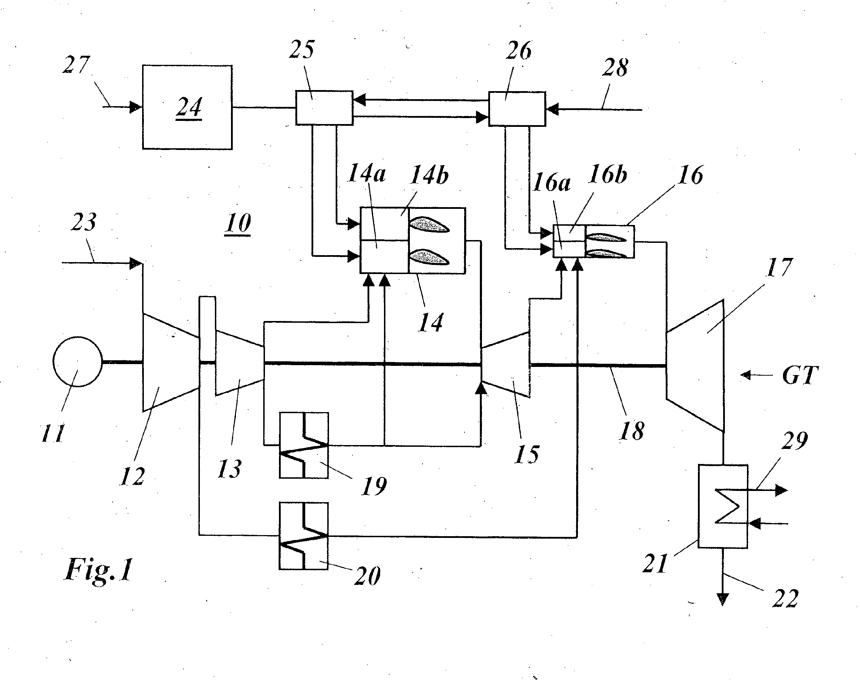

In Fig. 1 ist in einem stark vereinfachten Blockschaltbild ein Kombikraftwerk mit integrierter Vergasung gemäss einem Ausführungsbeispiel der Erfindung wiedergegeben. Das Kombikraftwerk 10 mit integrierter Vergasung umfasst eine Gasturbine GT, die auf einer Welle 18 einen Niederdruckverdichter 12, einen Hochdruckverdichter 13, eine Hochdruckturbine 15 und eine Niederdruckturbine 16 aufweist und einen Generator 11 antreibt. In der Hochdruckturbine 15 wird Heissgas aus einer ersten Brennkammer 14 entspannt, anschliessend zu einer zweiten Brennkammer 16 geleitet und hält dort einen zweiten Verbrennungsprozess aufrecht, dessen heisse Abgase in der Niederdruckturbine 17 entspannt werden. Die aus der Niederdruckturbine 17 austretenden Abgase werden durch einen Abhitzedampferzeuger 21 geschickt, um innerhalb eines angeschlossenen Wasser/Dampfkreislaufs 29 Dampf für eine (in Fig. 1 nicht dargestellte) Dampfturbine zu erzeugen. Die abgekühlten Abgase werden schliesslich über einen Abgasauslass 22 an einen Kamin oder dgl. mit entsprechenden Filtermöglichkeiten abgegeben.

Die erste Brennkammer 14 erhält aus dem Hochdruckverdichter 13 verdichtete. Verbrennungsluft, die vom Niederdruckverdichter 12 über einen Lufteinlass 23 angesaugt und vorverdichtet worden ist. Am Ausgang des Hochdruckverdichters 13 (oder ggf. auf einer Zwischenstufe) wird verdichtete Luft abgezweigt, in einem Hochdruck-Durchlaufkühler 19 abgekühlt, und als Kühlluft zur ersten Brennkammer 14 und zur Hochdruckturbine 15 geschickt. Am Ausgang des Niederdruckverdichters 12 (oder ggf. auf einer Zwischenstufe) wird ebenfalls verdichtete Luft abgezweigt, in einem Niederdruck-Durchlaufkühler 20 abgekühlt, und als Kühlluft zur zweiten Brennkammer 14 geschickt.

Die erste Brennkammer 14 enthält mehrere Brennergruppen 14a, 14b mit jeweils mehreren Brennern, die unabhängig voneinander betrieben und mit unterschiedlichen Arten von Brennstoff versorgt werden können. Auch die zweite Brennkammer 16 enthält mehrere Brennergruppen 16a, 16b, die unabhängig voneinander betrieben und mit unterschiedlichen Arten von Brennstoff versorgt werden können. Die Brennergruppen 14a,b und 16a,b sind in Fig. 1 nur schematisch angedeutet und werden durch separate Flammen symbolisiert.

Das Kombikraftwerk 10 umfasst neben der Gasturbine GT und dem Wasser/Dampfkreislauf 29 mit der zugehörigen Dampfturbine eine Vergasungseinrichtung 24, in der Kohle, Biomasse oder ein anderes, in synthetisches Brenngas umwandelbares Ausgangsmaterial vergast werden kann. Die Vergasungseinrichtung 24 ist in Fig. 1 nur als einfacher Block wiedergegeben, umfasst jedoch eine Vielzahl von Untereinheiten und Verbindungen zum übrigen Teil des Kombikraftwerkes 10, die insbesondere der Erzeugung und Zufuhr von Sauerstoff und der Reinigung des erzeugten Gases dienen. Die Vergasungseinrichtung 24 wird über eine erste Brennstoffzufuhr 27 mit geeignetem Ausgangsmaterial (Kohle et.) beschickt und gibt das erzeugte Syngas - möglicherweise über eine Zwischenspeicherung - an die Gasturbine GT ab. Über eine zweite Brennstoffzufuhr 28 kann die Gasturbine GT darüber hinaus mit Erdgas oder Flüssigbrennstoff, wie z.B. Öl, als weiterem Brennstoff versorgt werden, der insbesondere zur Stützung des Betriebs dient.

Um die sehr flexiblen Betriebsmöglichkeiten der Gasturbine GT mit sequentieller Verbrennung im vorliegenden Fall des Kombikraftwerkes mit Vergasung voll auszuschöpfen, sind Möglichkeiten vorgesehen, um nicht nur die beiden Brennkammern 14 und 16 der Gasturbine GT wahlweise mit Syngas aus der Vergasungseinrichtung 24 oder mit einem über die zweite Brennstoffzufuhr 28 zugeführten Stützbrennstoff zu betreiben, sondern auch jede Brennkammer 14, 16 für sich in einstellbarer Weise mit beiden Brennstoffen gleichzeitig zu fahren. Dazu können die einzelnen Brenngruppen 14a,b und 16a,b der Brennkammern 14 und 16 wahlweise mit einem der Brennstoffe betrieben werden. Hierzu ist eine (in Fig. 1 beispielhaft dargestellte) steuer- und umschaltbare Brennstoffverteilvorrichtung 25, 26 vorgesehen, die eingangsseitig mit dem Ausgang der Vergasungseinrichtung 24 und der zweiten Brennstoffzufuhr 28 verbunden ist, und ausgangsseitig zu den einzelnen Brennergruppen 14a,b und 16a,b in den Brennkammern 14, 16 führt. Innerhalb der Brennstoffverteilvorrichtung 25, 26 sind beispielsweise steuerbare Ventile angeordnet, die geöffnet oder geschlossen oder umgeschaltet werden können, um einen der beiden Brennstoffe in der vorgegebenen Menge zu einer der Brennergruppen 14a,b bzw. 16a,b zu leiten.

Mit einer solchen Konfiguration der Gasturbine GT und deren Brennstoffversorgung lassen sich in einem IGCC-Kraftwerk neue Arten der Brennstoffumschaltung (FSWO) und der kombinierten Beschickung mit zwei Brennstoffen verwirklichen. Wegen der örtlichen Trennung der beiden Brennkammern 14 und 16 in der Gasturbine GT ist es möglich, jede der Brennkammern mit einem anderen Brennstoff zu befeuern, ohne Lastschwankungen, Pulsationen oder einen Flammenrückschlag zu riskieren. So ist es insbesondere denkbar, die eine Brennkammer mit Syngas zu fahren, die andere Brennkammer dagegen mit Erdgas oder Flüssigbrennstoff, je nachdem, in welchem Umfang die einzelnen Brennstoffe zur Verfügung stehen.

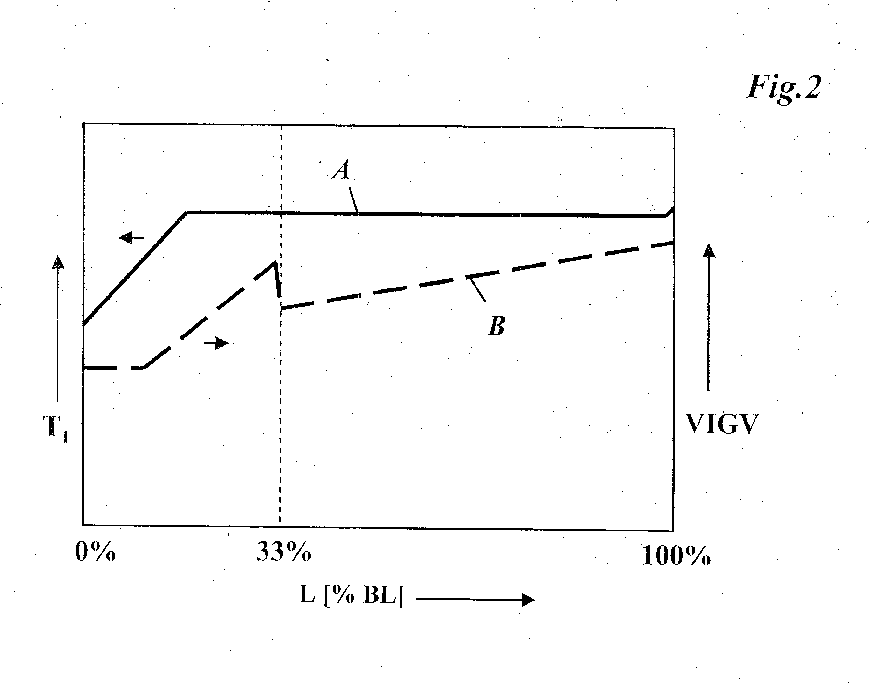

Es ist aber auch möglich, die Gasturbine GT hochzufahren, indem die erste Brennkammer 14 mit Erdgas oder Flüssigbrennstoff bis zu einer gewissen Last (L) befeuert wird, und dann erst die zweite Brennkammer 16 ausschliesslich mit Syngas zu starten. In Fig. 2 gibt die obere Kurve A für ein solches Vorgehen die Temperatur T₁ in der ersten Brennkammer 14 an: Bis zu einer Last L von etwa 33% der Grundlast BL wird die erste Brennkammer 14 mit Stützbrennstoff (Erdgas oder Öl) betrieben, wobei die Temperatur in der Brennkammer bis zu einer Last von etwa 15% ansteigt und dann konstant bleibt. Ab einer Last von 33% wird die zweite Brennkammer 16 mit Syngas betrieben zugeschaltet. Die gestrichelte untere Kurve B zeigt dabei die Öffnung der verstellbaren Einlass-Leitschaufeln (Variable Inlet Guide Vanes VIGV). Hierdurch wird eine zusätzliche Zuverlässigkeit erreicht, da die beiden Brennkammern 14, 16 stets gleichmässig mit denselben unterschiedlichen Brennstoffen betrieben werden und der Haupt- und Stützbrennstoff nicht miteinander wechselwirken. Die Gasturbine GT kann dann zu hohen Lasten hochgefahren werden, wo die erste Brennkammer 14 dann sicher auf Syngas umgestellt werden kann, ohne grössere Schwankungen zu verursachen.

Es ist aber auch denkbar, ab 33% Last die zweite Brennkammer mit einem Stützbrennstoff zu betreiben. Weiterhin ist es denkbar, eine der Brennergruppen 16a,b in der zweiten Brennkammer 16 mit Syngas zu betreiben, während eine andere der Brennergruppen 16a,b mit einem Stützbrennstoff befeuert wird. Auf diese Weise kann die Zwischenüberhitzungs-Brennkammer bei sehr niedrigen Lasten ohne Probleme betrieben werden, während die Vergasungseinrichtung 24 nach und nach beginnt, Syngas zu erzeugen.

Insgesamt zeichnet sich die Erfindung durch die folgenden Merkmale und Vorteile aus:
- In einer Gasturbine GT mit sequentieller Verbrennung werden wenigstens zwei verschiedene Brennkammern mit unterschiedlichen Brennstoffen wie z.B. Syngas, Erdgas oder Flüssigbrennstoff (Öl) betrieben.
- In den einzelnen Brennkammern können darüber hinaus separate Brennergruppen vorhanden sein, die zusätzlich mit unterschiedlichen Brennstoffen betrieben werden.
- Die Gasturbine wird mittels Stützbrennstoff in der ersten Brennkammer gestartet und bis zu etwa 33% Last hochgefahren. Dann wird die zweite Brennkammer zunächst mit Syngas betrieben, bis schliesslich bei hohen Lasten die erste Brennkammer auf Syngas umgeschaltet wird.
- Alternativ dazu kann die zweite Brennkammer in separaten Brennergruppen nebeneinander mit Syngas und Stützbrennstoff betrieben werden. Wenn ausreichend Syngas vorhanden ist, wird die zweite Brennkammer vollständig auf Syngas umgestellt.
- Durch die getrennte Befeuerung der Brennkammern mit unterschiedlichen Brennstoffen wird eine grosse Flexibilität des Betriebs erreicht.
- Das in weitem Rahmen variierbare gleichzeitige Verbrennen unterschiedlicher Brennstoffe in jeweils einer Brennkammer führt zu einer erhöhten Verfügbarkeit.
- Die Lösung zeichnet sich durch eine grosse Einfachheit aus.
- Das Risiko von Pulsationen während der Brennstoffumschaltung ist erheblich vermindert.
- Desgleichen ist das Risiko eines Flammenrückschlags während der Brennstoffumschaltung erheblich vermindert.

### BEZUGSZEICHENLISTE

- 10: Kombikraftwerk mit integrierter Vergasung
- 11: Generator
- 12: Niederdruckverdichter
- 13: Hochdruckverdichter
- 14,16: Brennkammer
- 14a,b: Brennergruppe
- 15: Hochdruckturbine
- 16a,b: Brennergruppe
- 17: Niederdruckturbine
- 18: Welle
- 19: Hochdruck-Durchlaufkühler
- 20: Niederdruck-Durchlaufkühler
- 21: Abhitzedampferzeuger
- 22: Abgasauslass
- 23: Lufteinlass
- 24: Vergasungseinrichtung
- 25,26: Brennstoffverteilvorrichtung
- 27,28: Brennstoffzufuhr
- 29: Wasser/Dampfkreislauf
- GT: Gasturbine

## Patentansprüche

1. Verfahren zum Betrieb einer Gasturbine (GT) mit sequentieller Verbrennung, welche wenigstens einen Verdichter (12, 13), eine erste Brennkammer (14) mit einer nachgeschalteten ersten Turbine (15) und eine zweite Brennkammer (16) mit einer nachgeschalteten zweiten Turbine (17) umfasst, wobei der wenigstens eine Verdichter (12,13) Luft ansaugt und verdichtet und die verdichtete Luft der ersten Brennkammer (14) zur Verbrennung eines ersten Brennstoffes zuführt, und das aus der ersten Turbine (15) austretende Gas der zweiten Brennkammer (16) zur Verbrennung eines zweiten Brennstoffes zugeführt wird, wobei als erster und zweiter Brennstoff unterschiedliche Brennstoffe verwendet werden, **dadurch gekennzeichnet, dass** die erste Brennkammer (14) und/oder die zweite Brennkammer (16) mehrere Gruppen von Brennern (14a,b; 16a,b) umfasst, und dass verschiedene Brennergruppen (14a,b; 16a,b) innerhalb einer Brennkammer (14, 16) mit unterschiedlichen Brennstoffen betrieben werden.

2. Verfahren nach Anspruch 1, **dadurch gekennzeichnet, dass** als erster und zweiter Brennstoff ein Brennstoff aus der Gruppe Syngas, Erdgas und Flüssigbrennstoff, insbesondere Öl, verwendet wird.

3. Verfahren nach Anspruch 1 oder 2, **dadurch gekennzeichnet, dass** zum Anfahren der Gasturbine (GT) zunächst in einem ersten Schritt die erste Brennkammer (14) mit einem ersten Brennstoff aus der Gruppe Erdgas und Flüssigbrennstoff, insbesondere Öl, als Stützbrennstoff betrieben wird, bis die Gasturbine (GT) einen vorgegebenen Teil, insbesondere etwa 33%, der Grundlast (BL) erreicht hat, und dass in einem zweiten Schritt zusätzlich die zweite Brennkammer (16) mit Syngas als zweitem Brennstoff betrieben wird, bis die Grundlast (BL) erreicht ist.

4. Verfahren nach Anspruch 3, **dadurch gekennzeichnet, dass** im zweiten Schritt die erste Brennkammer (14) auf den Betrieb mit Syngas umgeschaltet wird.

5. Verfahren nach Anspruch 1 oder 2, **dadurch gekennzeichnet, dass** die zweite Brennkammer (16) mehrere Gruppen von Brennern (16a,b) umfasst, dass zum Anfahren der Gasturbine (GT) zunächst in einem ersten Schritt die erste Brennkammer (14) mit einem ersten Brennstoff aus der Gruppe Erdgas und Flüssigbrennstoff, insbesondere Öl, als Stützbrennstoff betrieben wird, bis die Gasturbine (GT) einen vorgegebenen Teil, insbesondere etwa 33%, der Grundlast (BL) erreicht hat, und dass in einem zweiten Schritt zusätzlich die zweite Brennkammer (16) zunächst mit einer Kombination aus Syngas und einem Stützbrennstoff aus der Gruppe Erdgas und Flüssigbrennstoff, insbesondere Öl, betrieben wird, wobei das Syngas und der Stützbrennstoff in unterschiedlichen Brennergruppen (16a,b) verbrannt wird, und dass die zweite Brennkammer (16) in einem dritten Schritt schliesslich vollständig mit Syngas betrieben wird.

6. Verfahren nach einem der Ansprüche 1 bis 5, **dadurch gekennzeichnet, dass** die Gasturbine (GT) in einem Kombikraftwerk (10) mit integrierter Vergasung eingesetzt ist, dass in dem Kombikraftwerk (10) aus Kohle oder einem anderen geeigneten Ausgangsstoff durch Vergasung Syngas erzeugt wird, und dass das erzeugte Syngas in den ersten und/oder zweiten Brennstoffeingebracht wird.

7. Kombikraftwerk (10) mit integrierter Vergasung zur Durchführung des Verfahrens nach Anspruch 6, welches Kombikraftwerk (10) eine Gasturbine (GT) mit sequentieller Verbrennung und eine Vergasungseinrichtung (24) zur Erzeugung von Syngas mittels Vergasung von Kohle oder einem anderen geeigneten Ausgangsstoff umfasst, wobei die Gasturbine (GT) wenigstens einen Verdichter (12, 13), eine erste Brennkammer (14) mit einer nachgeschalteten ersten Turbine (15) und eine zweite Brennkammer (16) mit einer nachgeschalteten zweiten Turbine (17) umfasst, und wobei der wenigstens eine Verdichter (12, 13) Luft ansaugt und verdichtet und die verdichtete Luft der ersten Brennkammer (14) zur Verbrennung eines ersten Brennstoffes zuführt, und das aus der ersten Turbine (15) austretende Gas der zweiten Brennkammer (16) zur Verbrennung eines zweiten Brennstoffes zugeführt wird, wobei eine Brennstoffzufuhr (28) zur Zuführung eines Stützbrennstoffes, insbesondere in Form von Erdgas oder Flüssigbrennstoff, vorgesehen ist, und dass die Brennstoffzufuhr (28) und der Ausgang der Vergasungseinrichtung (24) über eine Brennstoffverteilvorrichtung (25, 26) wahlweise mit der ersten und/oder zweiten Brennkammer (14 bzw. 16) verbindbar ist, **dadurch gekennzeichnet, dass** die erste Brennkammer (14) und/oder die zweite Brennkammer (16) eine Mehrzahl von einzeln mit Brennstoff versorgbaren Brenngruppen (14a,b; 16a,b) aufweisen, und dass die Brennergruppen (14a,b; 16a,b) einzeln über die Brennstoffverteilvorrichtung (25, 26) wahlweise mit der Brennstoffzufuhr (28) oder dem Ausgang der Vergasungseinrichtung (24) verbindbar sind.

## Claims

1. Method for operating a gas turbine (GT) with sequential combustion, which comprises at least one compressor (12, 13), a first combustion chamber (14) with a first turbine (15) which is connected downstream, and a second combustion chamber (16) with a second turbine (17) which is connected downstream, wherein the at least one compressor (12, 13) draws in and compresses air and feeds the compressed air to the first combustion chamber (14) for combusting a first fuel, and the gas which issues from the first turbine (15) is fed to the second combustion chamber (16) for combusting a second fuel, wherein different fuels are used as first and second fuel, **characterized in that** the first combustion chamber (14) and/or the second combustion chamber (16) comprises a plurality of groups of burners (14a, b; 16a, b), and **in that** different burner groups (14a, b; 16a, b) inside a combustion chamber (14, 16) are operated with different fuels.

2. Method according to Claim 1, **characterized in that** a fuel from the group comprising syngas, natural gas and liquid fuel, especially oil, is used as first and second fuel.

3. Method according to Claim 1 or 2, **characterized in that**, for starting the gas turbine (GT), the first combustion chamber (14) in a first step is first of all operated with a first fuel from the group comprising natural gas and liquid fuel, especially oil, as the auxiliary fuel until the gas turbine (GT) has achieved a predetermined part, especially about 33%, of the base load (BL), and **in that** in a second step the second combustion chamber (16) is additionally operated with syngas as the second fuel until the base load (BL) is achieved.

4. Method according to Claim 3, **characterized in that** in the second step the first combustion chamber (14) is switched over to the operation with syngas.

5. Method according to Claim 1 or 2, **characterized in that** the second combustion chamber (16) comprises a plurality of groups of burners (16a, b), **in that**, for starting the gas turbine, the first combustion chamber (14) in a first step is first of all operated with a first fuel from the group comprising natural gas and liquid fuel, especially oil, as the auxiliary fuel until the gas turbine (GT) has achieved a predetermined part, especially about 33%, of the base load (BL), and **in that** in a second step the second combustion chamber (16) is additionally operated first of all with a combination of syngas and an auxiliary fuel from the group comprising natural gas and liquid fuel, especially oil, wherein the syngas and the auxiliary fuel are combusted in different burner groups (16a, b), and **in that** in a third step the second combustion chamber (16) is finally operated entirely with syngas.

6. Method according to one of Claims 1 to 5, **characterized in that** the gas turbine (GT) is used in a combined cycle power plant (10) with integrated gasification, **in that** in the combined cycle power plant (10) syngas is produced from coal or from another suitable source material by means of gasification, and **in that** the syngas which is produced is introduced into the first and/or second fuel.

7. Combined cycle power plant (10) with integrated gasification for carrying out the method according to Claim 6, which combined cycle power plant (10) comprises a gas turbine (GT) with sequential combustion and a gasification unit (24) for producing syngas by means of gasification of coal or of another suitable source material, wherein the gas turbine (GT) comprises at least one compressor (12, 13), a first combustion chamber (14) with a first turbine (15) which is connected downstream, and a second combustion chamber (16) with a second turbine (17) which is connected downstream, and wherein the at least one compressor (12, 13) draws in and compresses air and feeds the compressed air to the first combustion chamber (14) for combusting a first fuel, and the gas which issues from the first turbine (15) is fed to the second combustion chamber (16) for combusting a second fuel, wherein a fuel feed line (28) is provided for feeding an auxiliary fuel, especially in the form of natural gas or liquid fuel, and wherein the fuel feed line (28) and the outlet of the gasification unit (24) can be selectively connected to the first and/or second combustion chamber (14 or 16) via a fuel distribution device (25, 26), **characterized in that** the first combustion chamber (14) and/or the second combustion chamber (16) have a plurality of burner groups (14a, b; 16a, b) which can be supplied individually with fuel, and **in that** the burner groups (14a, b; 16a, b) can be selectively connected individually to the fuel feed line (28) or to the outlet of the gasification unit (24) via to the fuel distribution device (25, 26).

## Revendications

1. Procédé de conduite d'une turbine à gaz (GT) à combustion séquentielle, qui comprend au moins un compresseur (12, 13), une première chambre de combustion (14) suivie d'une première turbine (15) et une deuxième chambre de combustion (16) suivie d'une deuxième turbine (17), dans lequel ledit au moins un compresseur (12, 13) aspire et comprime de l'air et envoie l'air comprimé à la première chambre de combustion (14) pour la combustion d'un premier combustible, et le gaz sortant de la première turbine (15) est envoyé à la deuxième chambre de combustion (16) pour la combustion d'un deuxième combustible, dans lequel on utilise comme premier et deuxième combustibles des combustibles différents, **caractérisé en ce que** la première chambre de combustion (14) et/ou la deuxième chambre de combustion (16) comprend plusieurs groupes de brûleurs (14a, b; 16a, b), et **en ce que** différents groupes de brûleurs (14a, b; 16a, b) à l'intérieur d'une chambre de combustion (14, 16) fonctionnent avec des combustibles différents.

2. Procédé selon la revendication 1, **caractérisé en ce que** l'on utilise comme premier et deuxième combustibles un combustible du groupe gaz de synthèse, gaz naturel et combustible liquide, en particulier mazout.

3. Procédé selon la revendication 1 ou 2, **caractérisé en ce que** pour le démarrage de la turbine à gaz (GT), on fait d'abord fonctionner la première chambre de combustion (14) dans une première étape avec un premier combustible du groupe gaz naturel et combustible liquide, en particulier mazout, comme combustible d'appoint, jusqu'à ce que la turbine à gaz (GT) ait atteint une partie prédéterminée, en particulier environ 33 %, de la charge de base (BL), et **en ce que** dans une deuxième étape on fait fonctionner en plus la deuxième chambre de combustion (16) avec du gaz de synthèse comme deuxième combustible, jusqu'à ce que la charge de base (BL) soit atteinte.

4. Procédé selon la revendication 3, **caractérisé en ce que** l'on commute la première chambre de combustion (14) à la marche avec du gaz de synthèse pendant la deuxième étape.

5. Procédé selon la revendication 1 ou 2, **caractérisé en ce que** la deuxième chambre de combustion (16) comprend plusieurs groupes de brûleurs (16a, b), **en ce que** pour le démarrage de la turbine à gaz (GT), on fait d'abord fonctionner la première chambre de combustion (14) dans une première étape avec un premier combustible du groupe gaz naturel et combustible liquide, en particulier mazout, comme combustible d'appoint, jusqu'à ce que la turbine à gaz (GT) ait atteint une partie prédéterminée, en particulier environ 33 %, de la charge de base (BL), et **en ce que** dans une deuxième étape on fait fonctionner en plus la deuxième chambre de combustion (16) d'abord avec une combinaison de gaz de synthèse et d'un combustible d'appoint du groupe gaz naturel et combustible liquide, en particulier mazout, dans lequel on brûle le gaz de synthèse et le combustible d'appoint dans des groupes de brûleurs différents (16a, b), et **en ce que** l'on fait finalement fonctionner la deuxième chambre de combustion (16) dans une troisième étape entièrement avec du gaz de synthèse.

6. Procédé selon l'une quelconque des revendications 1 à 5, **caractérisé en ce que** la turbine à gaz (GT) est utilisée dans une centrale combinée (10) avec gazéification intégrée, **en ce que** l'on produit dans la centrale combinée (10) du gaz de synthèse à partir de charbon ou d'une autre matière première appropriée par gazéification, et **en ce que** l'on introduit le gaz de synthèse produit dans le premier et/ou dans le deuxième combustible.

7. Centrale combinée (10) avec gazéification intégrée pour la mise en oeuvre du procédé selon la revendication 6, centrale combinée (10) qui comprend une turbine à gaz (GT) à combustion séquentielle et un dispositif de gazéification (24) pour la production de gaz de synthèse par gazéification de charbon ou d'une autre matière première appropriée, dans laquelle la turbine à gaz (GT) comprend au moins un compresseur (12, 13), une première chambre de combustion (14) suivie d'une première turbine (15) et une deuxième chambre de combustion (16) suivie d'une deuxième turbine (17), et dans laquelle ledit au moins un compresseur (12, 13) aspire et comprime de l'air et envoie l'air comprimé à la première chambre de combustion (14) pour la combustion d'un premier combustible, et le gaz sortant de la première turbine (15) est envoyé à la deuxième chambre de combustion (16) pour la combustion d'un deuxième combustible, dans laquelle il est prévu une arrivée de combustible (28) pour la fourniture d'un combustible d'appoint, en particulier sous la forme de gaz naturel ou de combustible liquide, et dans laquelle l'arrivée de combustible (28) et la sortie du dispositif de gazéification (24) peuvent être raccordées par un dispositif de répartition de combustible (25, 26) au choix à la première et/ou à la deuxième chambre de combustion (14 ou 16), **caractérisée en ce que** la première chambre de combustion (14) et/ou la deuxième chambre de combustion (16) présentent une multiplicité de groupes de brûleurs (14a, b; 16a, b) pouvant être alimentés individuellement en combustible, et **en ce que** les groupes de brûleurs (14a, b; 16a, b) peuvent être raccordés individuellement par le dispositif de répartition de combustible (25, 26) au choix à l'arrivée de combustible (28) ou à la sortie du dispositif de gazéification (24).
